**Europäisches Patentamt**

**European Patent Office**

**Office européen des brevets**

(19)

(11) Publication number: **0 252 598**
**A2**

(12) **EUROPEAN PATENT APPLICATION**

(21) Application number: **87304802.9**

(22) Date of filing: **01.06.87**

(51) Int. Cl.⁴: **C04B 35/10 , B23B 27/14**

A request for correction of the description on page 3 (line 14); page 5 (line 22, 23) and page 6 (lines 8, 9, 18) as well as for the claims on page 12 (line 18) has been filed pursuant to Rule 88 EPC. A decision on the request will be taken during the proceedings before the Examining Division (Guidelines for Examination in the EPO, A-V, 2.2).

The title of the invention has been amended (Guidelines for Examination in the EPO, A-III, 7.3).

(30) Priority: **07.06.86 GB 8613891**

(43) Date of publication of application:
**13.01.88 Bulletin 88/02**

(84) Designated Contracting States:
**DE ES FR IT**

(71) Applicant: **ANDERSON STRATHCLYDE PLC**
**Station Works**
**Saunderton High Wycombe**
**Buckingshamshire.HP14 4HS(GB)**

(72) Inventor: **Cave, John Andrew**
**25 Old Windmill Way Long Crendon**
**Aylesbury§Buckinghamshire(GB)**

(74) Representative: **Hooper, John Peter Lindesay**
**et al**
**FITZPATRICKS 53A High Street**
**Huntingdon Cambridgeshire PE18 6AQ(GB)**

(54) **Sintered ceramic material containing refractory material.**

(57) Sintered ceramics, that may be of use in making the extremely hard tips of cutting tools, can be made from a ceramic matrix material having a ceramic refractory material incorporated therein.

The present invention seeks to provide an improved sintered ceramic material of this general type, wherein the refractory material consists of particles the sizes of which are significantly different and lie at least predominantly in at least two substantially different mean particle size ranges.

Xerox Copy Centre

## Sintered Materials

This invention is concerned with sintered materials. More particularly, it relates to sintered ceramics, especially sintered alumina ceramics, that may be of use in making the extremely hard tips of cutting tools such as those employed in lathes, and so on, for cutting steel.

It is known to make sintered material comprising a ceramic matrix material having a different ceramic material incorporated therein in order to influence the mechanical properties of the matrix. Thus, in the Specification of Max Planck British Letters Patent No. 1,527,780 there is described a ceramic formed body comprising a ceramic matrix (e.g. aluminium oxide - that is, alumina) having dispersed therein a ceramic incorporation material (e.g. zirconium oxide - that is, zirconia). The zirconia incorporation material has two different enantiotropic forms - a dense tetragonal form at sintering temperatures (around 1500°C), and a less dense monoclinic form at ambient temperatures (around 15°C). The zirconia ceramic incorporation material is said to be conveniently dispersed in the matrix in the form of a particulate agglomerate of smaller particles, the average agglomerate size being from 2 to 15 micrometres. The sintered ceramic body produced is said to have, compared with previously-known ceramics, higher fracture toughness and equally high mechanical strength.

In another Specification - that of Feldmühle British Letters Patent No. 2,007,641B - there is described a sintered ceramic material comprising a ceramic matrix material (e.g. aluminium oxide) with a refractory material (e.g. zirconium oxide) distributed therein. The zirconia refractory material is present in a metastable high temperature enantiotropic form which is of higher density than the enantiotropic form that is stable at room temperature. The zirconia refractory material in the sintered material after cooling is said to have a mean particle size in the range of from 0.05 to 2 micrometres. The produced sintered ceramic is said to have not only good fracture toughness but also good bending strength,

Though the relevant Prior Art sintered ceramics do indeed have good toughness and bending strength nevertheless there is always room for improvement - and the present invention seeks to provide such a sintered ceramic material having improved mechanical properties in these respects.

Accordingly, the invention provides a sintered material which comprises a ceramic matrix material having a refractory material dispersed therein, the refractory material having different enantiotropic forms at production (sintering) and ambient temperatures, with the production temperature form having a higher density than the ambient temperature form, wherein the refractory material consists of particles the sizes of which are significantly different and lie at least predominantly in at least two substantially different mean particle size ranges.

The ceramic matrix material can be any of those materials used or proposed for use in the Art. Thus, as is well-known, various metal or semi-metal carbides, nitrides, borides or oxides may provide the ceramic matrix material. Typical metals or semi-metals are aluminium, silicon and boron, while examples of actual ceramic matrix materials are aluminium oxide, silicon nitride, and boron carbide. Preferably, however, the ceramic matrix material is aluminium oxide.

The refractory material may also be many of those materials used or proposed for use in the Art. Typical materials are the oxides of metals such as zirconium and hafnium. The preferred actual refractory material is zirconium oxide (especially) and/or hafnium oxide.

As mentioned above, zirconium oxide (zirconia) exists in two enantotropic forms. One of these is a dense tetragonal form; it is relatively stable at the high temperatures - around 1500°C - used in the sintering process, but is much less stable at ambient - room, 15°C -temperature. At these lower temperatures the stable form is a less dense monoclinic form, and if the dense high temperature tetragonal enantiotrope is held at the low room temperature it will gradually convert into the less dense, i.e., larger-volume-occupying, monoclinic enantiotrope. It is this factor that can be employed to explain why the use of a two-enantiotrope refractory material results in a hard but tough - i.e., not brittle - sintered ceramic.

Firstly, the particulate materials - the ceramic matrix material and the refractory material - are intimately mixed and compacted. Then the mixture is sintered - heated to a point at which the component particles do not melt but nevertheless are caused to adhere strongly to each other. At this stage the refractory material takes on its dense form, and porosity is substantially removed from the compacted and sintered body. Finally, the sintered product is cooled to ambient temperature, and at least part of the dense entatiotrope of the refractory material converts into the less dense enantiotrope, occupying a greater volume. In effect, then, each particle of refractory material expands. Now, the refractory particles are firmly embedded within the mass of the ceramic matrix particles; everything is firmly bound to everything else. The result of the refractory particle expansion is to cause the fixed structure of the surrounding sintered material to beome elastically stressed. During any subsequent fracture this stress-field interacts with an advancing crack tip in such a way as to increase the applied stress necessary to continue crack propagation through the material, and therefore causes the material to be tougher.

It should be noted, incidentally, that there are a number of possible, and even plausible, explanations for the observed effect of using a two-enantiotrope refractory material. That given above is one of them; it may not necessarily be correct.

That feature of the sintered material of the invention that is believed to be truly inventive is the use of refractory particles the sizes of which are significantly different and lie at least predominantly in at least two substantially different mean particle size ranges (it will be understood, incidentally, that the particle size referred to are the sizes in the cooled material after sintering).

In order to understand this, it is important to observe that each particle size range refers to the relatively small range of particle sizes actually present within the material - for example, one range of actual sizes might be about 1 micrometer ± 0.5 micrometers (thus, from 0.5 to 1.5), while another might be about 15 micrometers ± 5 micrometers (thus, from 10 to 20 micrometers) - but that the inventive sintered material appears to be satisfactory when using particles that are selected from much wider ranges - for example, smaller particles might be selected from the range of 0.2 to 3 micrometers, while larger particles might be selected from the range of 5 to 30 micrometers. It will be noted that these latter two ranges are not substantially different; the requirement, however, is for the actual size ranges of particles within the sintered material to be substantially different, and this criterion is met by, for instance, the aforementioned 0.5 to 1.5 to 20 micrometer ranges. So, in the invention the different sizes of particles may be selected from ranges of sizes that are - at least at their adjacent limits - not substantially different provided that the actual selections are substantially different.

The at least two mean particle size ranges are substantially different. It is difficult to be precise about the "substantiveness" of the difference. However, as discussed in more detail hereinafter a two-range material may have particles of 0.1 to 1 micrometers and other particles of 10 to 30 micrometers, so that there is a factor of at least 10 between the ranges. Generally, then, a substantial difference is a difference of an order - a 10-fold difference - in size.

Normally there will be only two size ranges. The comments given herein for the most part assume this - two ranges - to reduce the complexity of the discussion.

Though within the product itself the particles will be of two quite different sizes - or of two quite different narrow size ranges - they may have been selected from much wider ranges of sizes. For small particles one such size range may suitable be from 0.2 to 3, preferably from 0.2 to 1 micrometers (though 2 micrometers gives very good results), while the other (larger) particle size range may suitably be from 5 to 30, preferably from 10 to 30, micrometers (though even down to 3.5 micrometers may be acceptable, around 14 micrometers seems the best).

The properties of the formed sintered material are not unconnected with the sizes of the particles, though it is not easy to give any firm rules as to what properties result from the use of which sizes. Nevertheless, by way of guidance it can be said that while the size of the smaller particles seems in general to have very little effect, the size of larger particles does have an effect: briefly, the larger the large particles the softer the sintered product becomes, and the product is toughest with a small quantity of large large particles but a larger quantity of small large particles.

The refractory material may be present in each size range in any amount such that the total refractory material is about that quantity commonly used or suggested for use in the Art. Amounts of from 0.2 to 20 wt %, conveniently 5 to 20 wt %, are generally satisfactory. For the finer particles 8 to 15 wt % is preferred, and for the coarser 2 to 10 wt % is preferred.

Not unsurprisingly, perhaps, the properties of the formed sintered material are also not unconnected with the amounts of the particles, though again it is not easy to give any firm rules as to what properties result from the use of which amounts. Nevertheless, by way of guidance it can be said that the better toughness values are obtained with larger quantities of the smaller particles and smaller quantities of the larger particles. The preferred amounts are around 12 to 15 wt % large and 0.2 to 3 wt % small.

Examination of sintered material made in accordance with the invention has shown that it is substantially free of micro-cracks.

Sintered material made in accordance with the invention is particularly, but not exclusively, useful for tip inserts for cutting tools, and especially inserts for tools for cutting steel.

The following Examples are now given, though by way of illustration only, to show details relating to various specific embodiments of the invention.

3

Comparative Example A: A sintered material containing ceramic matrix material only

200g of aluminium oxide powder having a mean particle size of 1 micrometer, and suitable for the production of sintered, high density and finely particulate alumina ceramic, are wetted, and the wet powder is dried and pressed in a die cavity to form a compacted disc 20 mm in diameter and 9 mm thick. The compact is then sintered in an electrically heated furnace in air at a temperature of 1540°C for a dwell time of 1 hour. During sintering, the compact underwent a linear shrinkage of 21%.

Hardness testing, determination of Palmqvist crack length, and measurement of density by the methods described hereinafter produced the following results:

Hardness HV30 (micrometers) = 1625
Palmqvist crack length (micrometers) = 1230
Density (g/cm$^3$) = 3.91

Comparative Example B: A sintered material containing one only particle size of refractory material

The sintered material is made in much the same way as the material of Comparative Example A.

170g of aluminium oxide powder having a mean particle size of 1 micrometer, and suitable for the production of sintered, high density and finely particulate alumina ceramic, are mixed wet with 30 g (15 wt % of the whole) monoclinic zirconium oxide powder having a mean particle size of 2 micrometers. The powder mixture is dried, and pressed in a die cavity to form a compacted disc 20 mm in diameter and 9 mm thick. The compact is sintered in an electrically heated furnace in air at a temperature of 1500°C for a dwell time of 1 hour. During sintering, the compact underwent a linear shrinkage of 21%.

Hardness testing, determination of Palmqvist crack length, and measurement of density produced the following results:

Hardness HV30 (micrometers) = 1610
Palmqvist crack length (micrometers) = 1000
Density (g/cm$^3$) = 4.14

## EXAMPLE 1: An Inventive Sintered Material

This sintered material is made in much the same way as the material of the Comparative Examples.

170g of aluminium oxide powder having a mean particle size of 1 micrometer, and suitable for the production of sintered, high density and finely particulate alumina ceramic, are mixed wet with 25g (12.5 wt % of the whole) monoclinic zirconium oxide powder having a mean particle size of 2 micrometers, and 5 g (2.5 wt % of the whole) monolinic zirconium oxide powder having a mean particle size of 14 micrometers. The powder mixture is dried and pressed in a die cavity to form a compacted disc 20 mm in diameter and 9mm thick. The compact is sintered in an electrically heated furnace in air at a temperature of 1500°C for a dwell time of 1 hour. During sintering, the compact underwent a linear shrinkage of 21%.

Hardness testing, determination of Palmqvist crack length, and measurement of density produced the following results,

Hardness HV30 (micrometers) = 1620
Palmqvist crack length (micrometers) = 935
Density (g/cm$^3$) = 4.12

## EXAMPLE 2: Another Inventive Sintered Material

Using the same technique as in Example 1, 170g of the same aluminium oxide powder are mixed wet with 29.6 (14.8 wt %) monclinic zirconium oxide powder having a mean particle size of 2 micrometers and 0.4 g (0.2 wt %) monoclinic zirconium oxide powder having a mean particle size of 14 micrometers, and the powder mixture is made into a sintered disc (with a linear shrinkage of 21%).

Hardness testing, determination of Palmqvist crack length, and measurement of density produced the following results:

Hardness HV30 (micrometers) = 1620
Palmqvist crack length (micrometers) = 895
Density (g/cm$^3$) = 4.14

## The Tests

### Hardness - Vickers Hardness Test

The surface of a sample is polished, and a diamond pyramid-shaped tool is pressed apex down into it at some standard load - in this case, 30kg. There is then determined the average diagonal length of the formed indentation - the smaller the indent, the harder the material.

### Palmqvist Crack Length

When carrying out the Hardness Test described above a series of small cracks occur radiating away from the corners of the indentation. The lengths of these cracks are measured (within 3 minutes of formation) and totalled; the smaller the total, the tougher the material.

Crack length totals greater than 1200 micrometers are bad - that is, the matrix material has not been toughened. The total is preferably less than 1000, and very preferably less than 900.

### Density

This was calculated simply by weighing the sample, measuring its diameter and thickness and so calculating its volume, and dividing the one by the other.

### The Results

The various Test figures given above for each sample are tabulated in the following Table.

| Example | Hardness HV 30 (micrometers) | Palmqvist Crack Length (micrometers) | Density (g/cm³) |
|---------|-------------------------------|---------------------------------------|------------------|
| A | 1625 | 1230 | 3.91 |
| B | 1610 | 1000 | 4.14 |
| 1 | 1620 | 935 | 4.12 |
| 2 | 1620 | 895 | 4.14 |

### Remarks

From these Figures it can be seen from a comparison of Examples A and B, that the addition to alumina of 15 wt % of 2 micrometer zirconia toughens the material. However, further toughening occurs, at the same zirconia content, if the zirconia is added in the form of two lots, having particles of markedly different mean diameters (Example 1). It has been found that particularly tough alumina results if the addition of coarser zirconia particles is limited to a relatively small amount (say, 0.2 wt % - Example 2).

**Claims**

1. A sintered material which comprises a ceramic matrix material having a refractory material dispersed therein, the refractory material having different enantiotropic forms at production (sintering) and ambient temperatures, with the production temperature form having a higher density than the ambient temperature form,

characterised in that the refractory material consists of particles the sizes of which are significantly different and lie at least predominantly in at least two substantially different mean particle size ranges.

2. A sintered material as claimed in Claim 1, wherein the ceramic matrix material is aluminium oxide, and the refractory material is zirconium oxide.

3. A sintered material is claimed in either of the preceding Claims, wherein the mean refractory particle size in one of the at least two mean particle size ranges is at least 10 times the other.

4. A sintered material as claimed in any of the preceding Claims, wherein for small particles the selection size range is from 0.2 to 1 micrometers, while for the larger particles the selection size range is from 10 to 30 micrometers.

5. A sintered material as claimed in any of the preceding Claims, wherein the refractory material is present in each size range in an amount such that the total refractory material is from 5 to 20 wt %, the finer particles being present in an amount from 8 to 15 wt %, and the coarser in an amount from 2 to 20 wt %.

6. A tip insert for a cutting tool, whenever made from a sintered material as claimed in any of the preceding Claims.

# Fitzpatricks

## 1887    1987

Chartered Patent Agents - European Patent Attorneys - International Patents - Trade Marks - Designs & Copyright

GLASGOW OFFICE: 4 WEST REGENT STREET GLASGOW G2 1RS     ALSO AT BELFAST · EDINBURGH · ABERDEEN
LONDON OFFICE: KERN HOUSE 61/62 LINCOLN'S INN FIELDS LONDON WC2B 6EX     TEL: 01-242 6601

**53A HIGH STREET
HUNTINGDON
CAMBRIDGESHIRE
PE18 6AQ**
TELEPHONE: 0480 59585
TELEX: 32763 FITPAT G
CABLE: FITZPATENT, HUNTINGDON
FAX: 0480 412888

The European Receiving Section,
The Patent Office,
State House,
66-71 High Holborn,
LONDON, WC1R 4TP.

| OUR REF | 6/43525/078 | YOUR REF | 87304802.9 | DATE | 10th June 1987 |
|---|---|---|---|---|---|

Dear Sir,

**Anderson Strathclyde European Patent Application
No. 87/304,802.9 - Sintered Materials**

---

The Specification of the above Application contains a few relatively trivial typographical errors that should be corrected at some suitable moment. Thus:-

The Description

Page 5   Line 22:     for "suitable" read "suitably"
         Line 23:     for "1 micrometers" read "1, micrometers".

Page 6   Lines 8/9:   for "2 to 10 wt% read "0.2 to 10 wt%"
         Line 18:     for "12 to 15 wt% large and 0.2 to 3 wt% small" read "12 to 15 wt% small and 0.2 to 3 wt% large".

The Claims

Page 12 Line 30:     for "2 to 10 wt%" read "0.2 to 10 wt%".

A copy of this letter has been sent directly to the EPO at The Hague.

Yours faithfully,

FITZPATRICKS.

JLC

J. P. L. Hooper
Authorised Representative

FITZPATRICK PARTNERS   REGISTERED IN SCOTLAND No 67059

# Fitzpatricks

**1887**     **1987**

Chartered Patent Agents - European Patent Attorneys - International Patents - Trade Marks - Designs & Copyright

GLASGOW OFFICE: 4 WEST REGENT STREET GLASGOW G2 1RS     ALSO AT BELFAST · EDINBURGH · ABERDEEN
LONDON OFFICE: KERN HOUSE 61/62 LINCOLN'S INN FIELDS LONDON WC2B 6EX     TEL: 01-242 6601

The European Patent Office,
Branch at the Hague,
Receiving Section,
P.B. 5818 Patentlaan 2,   .
2280 HV Rijswijk (ZH),
NETHERLANDS.

**53A HIGH STREET
HUNTINGDON
CAMBRIDGESHIRE
PE18 6AQ**
TELEPHONE: 0480 59585 .
TELEX: 32763 FITPAT G
CABLE: FITZPATENT, HUNTINGDON
FAX: 0480 412888

OUR REF     6/43525/078     YOUR REF    87304802.9     DATE    18th June 1987

Gentlemen,

Anderson Strathclyde European Patent Application
No. 87/304 802 9 - Sintered Materials
--------------------------------------------------------------

Further to our letter of 10th June 1987, we now find that
the Specification of the above Application contains an
additional relatively trivial typographical error that should be
corrected at some suitable moment. Thus:-

The Description

Page 3  Line 14:    delete "gradually".

Yours faithfully,

J.P.L. HOOPER
AUTHORISED REPRESENTATIVE.

ddw